## Europäisches Patentamt
## European Patent Office
## Office européen des brevets

(19)

(11) Publication number: **0 021 698**
**B1**

(12) **EUROPEAN PATENT SPECIFICATION**

(45) Date of publication of patent specification: **02.11.83**

(51) Int. Cl.³: **B 66 B 5/28, F 16 F 9/06**

(21) Application number: **80301933.0**

(22) Date of filing: **09.06.80**

(54) Cushioning devices.

(30) Priority: **08.06.79 GB 7920041**

(43) Date of publication of application:
**07.01.81 Bulletin 81/1**

(45) Publication of the grant of the patent:
**02.11.83 Bulletin 83/44**

(84) Designated Contracting States:
**DE FR GB**

(56) References cited:
**DE - A - 2 558 165**
**DE - B - 1 218 678**
**DE - B - 1 240 340**
**GB - A - 833 915**

(73) Proprietor: **OLEO INTERNATIONAL HOLDINGS LIMITED**
**Walcote Blackdown**
**Leamington Spa Warwickshire CV32 6QZ (GB)**

(72) Inventor: **Carlton, Quintin Healey**
**19 Warren Court**
**Leamington Spa Warwickshire (GB)**
Inventor: **Bushnell, John James**
**15 Orchard Way**
**Southam Warwickshire (GB)**
Inventor: **Stephens, Raymond Buckingham**
**34 Meadow Road**
**Alcester Warwickshire (GB)**

(74) Representative: **Everitt, Christopher James Wilders et al,**
**F.J. CLEVELAND & COMPANY 40/43 Chancery Lane**
**London WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

This invention relates to cushioning devices of the kind which comprise a base; a cylindrical tube which projects from the base, the tube having a series of holes formed in it at axially spaced locations, the holes extending through the wall of the tube and serving as communication ports for the passage of hydraulic fluid between the cylinder space within the tube and an annular hydraulic fluid reservoir which surrounds the tube; a hollow buffer plunger which is a sliding fit in the bore of the tube; and resilient means which urge the plunger relative to the tube and away from the base. Such cushioning devices are referred to as "cushioning devices of the kind referred to" in the remainder of this specification.

A particular use of a cushioning device of the kind referred to is as a lift buffer.

The resilient means of one form of such a lift buffer which is used widely comprise one or more helical springs which act between the base and a flange at the top of the buffer plunger and which surround the tube, the lower part of the helical spring or group of helical springs being immersed in hydraulic fluid in the reservoir. Various alternative arrangements of coil springs inside or outside the tube (such as a tension spring acting within the tube between a closure at the top of the tube and the buffer plunger as shown in German Auslegeschrift No. 1 218 678) have been proposed for a variety of reasons but the resultant lift buffers have usually had disadvantages of one form or another.

An object of this invention is to provide a cushioning device of the kind referred to in which the resilient means exert a force on the buffer plunger which is sufficient to satisfy certain regulations and yet which is simple to construct. Official regulations concerning lift buffers also direct that it be possible to check the level of hydraulic fluid in the buffer by removing a filler plug of similar device. Hence the resilient means of a lift buffer must be arranged to urge the buffer plunger upwards without pressurising the hydraulic fluid reservoir.

Compression of a cushioning device of the kind referred to is cushioned by displacement of hydraulic fluid from within the tube in front of the buffer plunger laterally through the holes in the tube that are not blocked by the plunger. Very high hydraulic fluid pressures can be established inside the tube during compression.

Various other forms of cushioning devices are known which incorporate hydraulic damping and which are arranged so that, as the device is compressed, gas in an enclosed space formed by a pair of telescopic elements is compressed thereby storing energy for extension of the device. British Patent Specification No.

833915, German Auslegeschrift No. 1240340 and German Offenlegungsschrift No. 2558165 disclose such devices. However none of these devices incorporates a gas spring arrangement which can be readily incorporated within a cushioning device of the kind referred to as the resilient means of that device.

According to this invention there is provided a cushioning device of the kind referred to wherein the resilient means comprise a gas spring which essentially comprises a variable volume chamber filled with compressed gas which chamber is formed by the interior of the hollow buffer plunger, and a rod which is a sliding fit within an aperture in the end wall of the chamber that is nearer to the base, which projects into the cylinder space and which is urged into contact with the base by gas pressure within the chamber whereby the volume of the gas filled chamber is reduced by the rod as the buffer plunger moves towards the base, there being sealing means which co-operate with the rod and seal against fluid flow through the aperture.

Means are preferably provided which oppose separation of the rod from the base. Such separation opposing means may comprise a disc which is fitted to the rod and which slides within the tube and means for venting the space between the disc and the base.

Where the tube projects upwards from the base, the sealing means may include a volume of liquid which lies on the lower end wall of the chamber within the chamber and surrounds the rod so as to form a liquid seal against escape of gas from within the chamber around the rod.

Conveniently, the cylindrical tube is spigotted into a ring which is fixed to the base. The cylindrical tube may be clamped against the base by clamping means which form part of an outer casing of the cushioning device. Conveniently the clamping means comprise a clamping ring within which the buffer plunger slides and which is screwed into a plate which forms the top of the outer casing.

When transporting hydraulic buffers, in which the plunger has an appreciable stroke, it is desirable that the plunger is held in the retracted position during transport. This not only reduces the overall length of the unit for handling or enclosing within a packing case but it also protects the surface of the plunger from damage during transport.

When the resilient means of the buffer comprise a spring it may not be practical to hold the buffer in the closed position due to the strength of the spring but even if the load of the spring is comparatively low, it could be dangerous because as soon as the restraining means is removed from the plunger it could extend very rapidly under the influence of the spring.

When the resilient means comprise a gas spring as described and the rod carries a piston head at its end within the cylinder space, it is possible to provide sufficiently restricted damping across the piston head that, when the restraining means on the plunger are released, the plunger would not extend rapidly and not present any danger.

One form of lift buffer in which this invention is embodied is described now by way of example with reference to the accompanying drawings, of which:

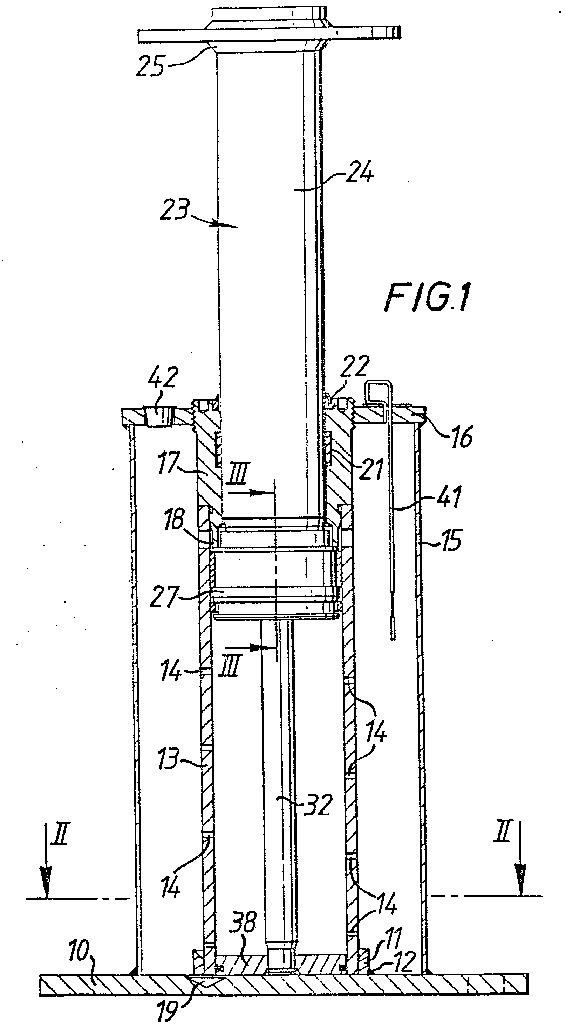

Figure 1 is a sectioned view of the lift buffer with the buffer plunger shown in elevation, the section being on the line I—I shown in Figure 2;

Figure 2 is a section on the line II—II shown in Figure 1; and

Figure 3 is a fragmentary section on the line III—III in Figure 1.

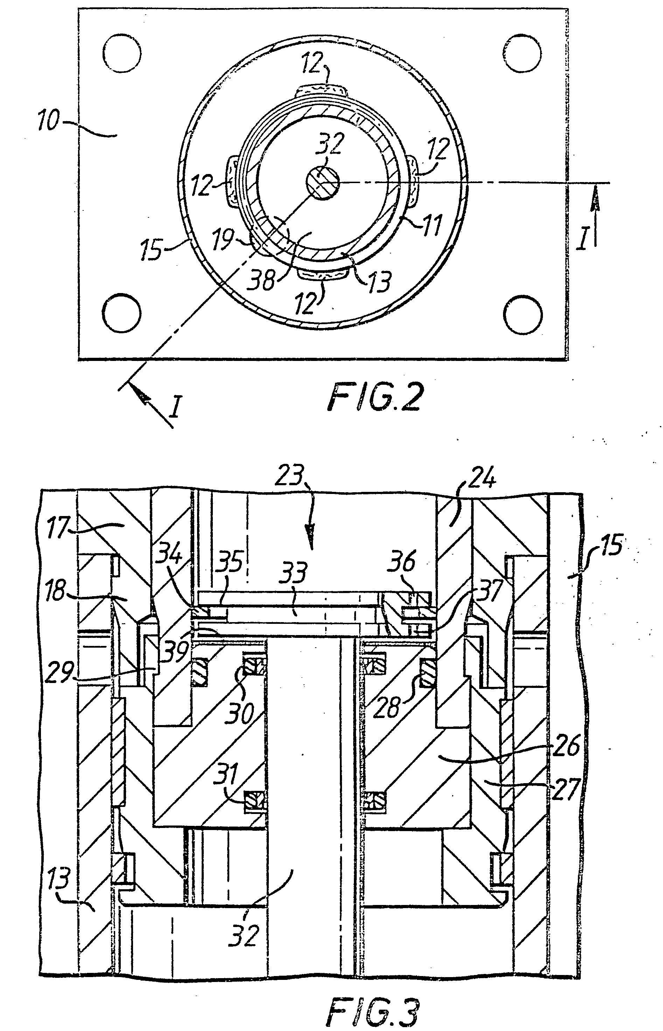

The lift buffer has a base plate 10. A ring 11 is welded to the upper surface of the base plate 10 at circumferentially spaced locations 12 as shown in Figure 2. The ring 11 is chamfered at the upper end of its central aperture.

A tube 13 is spigotted into the ring 11 and projects upwards from the base plate 10. A series of holes 14 are formed through the wall of the tube 13 at vertically-spaced locations.

An outer tube 15 surrounds the tube 13 substantially coaxially and is welded to the base plate 10 at its lower end and to an annular cover plate 16 at its upper end. The central aperture of the annular cover plate 16 is tapped. A clamp ring 17 is screwed into the tapped central aperture of the annular cover plate 16 and has a depending annular projection 18 which is spigotted into the bore of the ported tube 13. Hence the tube 13 is both located radially at its upper end and held with its lower end in contact with the base plate 10 by the clamp ring 17. The base plate 10, the outer tube 15, the cover plate 16 and the clamp ring 17 together from a hydraulic fluid container which is an outer casing of the buffer. A hole 19 is formed in the upper surface of the base plate 10 between an adjacent pair of the welds 12 with its centre substantially directed below the outer surface of the ported tube 13. The diameter of the hole 19 is greater than the combined radial thickness of the ring 11 and the tube 13.

The central aperture of the clamp ring 17 is formed as a cylindrical bore. The inside diameter of the ring 17 is less than the diameter of the bore of the ported tube 13. A plastic sleeve bearing is accommodated in an annular groove 21 which is formed in the bore of the ring 17. A scraper ring seal 22 is housed in a recess at the top of the bore of the ring 17.

A buffer plunger 23 comprises a tube 24 which is a sliding fit within the bore of the clamp ring 17. The top of the tube 24 is closed by an end cap 25 which conveniently is welded to the tube 24. The lower end of the tube 24 is closed by a bearing sleeve 26. A cup-shaped piston head 27 is fitted onto the lower end of the tube 24 and is a sliding fit in the bore of the ported tube 13. A hole is formed at the centre of the base of the piston head 27.

The bearing sleeve 26 has an upper smaller diameter portion which projects into the lower end of the tube 24 and which has a circumferential groove formed in its outer cylindrical surface, there being a sealing ring 28 housed in that groove so that it engages the tube 24 to form a fluid-tight seal between the sleeve 26 and the tube 24. The remainder of the sleeve 26 is spigotted into the cavity of the cup-shaped piston head 27 which is held against removal from the tube 24, by the engagement of a swaged portion 29 adjacent its brim within a circumferential groove which is formed in the outer surface of the tube 24. Two circumferential grooves 30 and 31 are formed in the bore of the bearing sleeve 26 at axially-spaced locations. A compound sealing ring which comprises an 'O' ring with an annular lip seal fitted snugly within its central aperture is fitted within each groove 30, 31. The two lip seals face in opposite directions so that each one is arranged to seal against flow of liquid towards the centre of the bearing sleeve 26 from the adjacent end of its bore. The inside diameter of each of the compound sealing rings when it is in its natural relaxed condition is less than the diameter of the bore of the bearing sleeve 26.

A rod 32 extends through the bore of the bearing sleeve 26 with a sliding clearance and is engaged by the two compound sealing rings. It also extends through the central hole in the base of the cup-shaped piston head 27. A piston head 33 is carried by the upper end of the rod 32. An outwardly-sprung ring 34, which engages the surface of the bore of the buffer plunger tube 24 so as to make a substantial gas-tight seal with the bore of the tube 24, is located in a circumferential groove 35 formed in the piston head 33. There is an annular clearance between the inner periphery of the ring 34 and the base of the groove 35. Passages 36 and 37 are formed by holes or grooves in the annular flange portions of the piston head 33 that form the side walls of the circumferential groove 35. The passages 36 and 37 form a path for gas flow across the piston head 33. The dimensions of the passage 36 through the upper annular flange portion of the piston head 33 are such that gas flow through it is restricted so that movement of the piston rod 33 is damped. A cylindrical disc 38, which is a neat sliding fit in the ported tube 13, is fitted onto the lower end portion of the piston rod 32 and tends to be seated on the base plate 10. A small quantity of hydraulic fluid 39 is contained within the tube 24 on top of the bearing sleeve 26.

Two holes are provided in the annular cover plate 16. One is for a dipstick 41. The other is a filler hole which is normally closed by a removable cap 42.

The cylinder spaces formed within the hollow buffer plunger 23 on either side of the ring 34 that is carried by the piston head 33 are filled with a compressed gas, such as nitrogen or air. Hence the plunger tube 24 forms a cylinder for a gas spring. The hydraulic fluid on top of the bearing sleeve 26 forms a liquid seal around the rod 32 which prevents escape of gas from within the tube 24 around the piston rod 32.

The interior of the ported tube 13 below the buffer plunger 23 is filled with hydraulic fluid. The annular space around the tube 13 within the tube 15 is a low pressure hydraulic fluid reservoir, there being an air space above the level of fluid in the reservoir.

The volume of hydraulic fluid in the buffer should be such as to maintain the reservoir level a little above the lower end of the piston head 33 when the buffer plunger 23 is at the upper end of its travel. The reservoir is filled or topped up by pouring hydraulic fluid through the hole which is opened when the filler cap 42 is removed.

If the buffer plunger 23 is forced down, when the buffer is installed at the foot of a lift shaft, it moves relative to the rod 32 and the piston head 33 so that the distance between the piston head 33 and the end cap 25 is reduced. Downwards movement of the cup-shaped piston head 27 progressively cuts off escape of hydraulic fluid from within the ported tube 13 through the holes 14 so that the speed of downwards movement of the buffer plunger 23 is reduced progressively until it is substantially zero when the lower-most hole 14 has been covered. The disc 38 is seated on the base plate 10 as the buffer plunger 23 is forced downwards. Very high fluid pressures can be established inside the tube 13. The hole 19 in the base plate 10 ensures that any fluid which leaks between the tube 13 and the disc 38 does not create a pressure build up below the disc 38 or across the end face of the tube 13 because it more than spans the tube 13 and the ring 11 so that any fluid which passes the disc 38 can escape freely to the reservoir. The reaction to the compressed gas loading on the piston head 33 and the portion of the rod 32 within the hollow buffer plunger 23 causes the buffer plunger 23 to move upwards back to the upper end of its travel when the downwards force is removed from the buffer plunger 23. The speed of such upwards movement of the buffer plunger 23 is controlled by the damping effect afforded by the passage 36 through which must pass all gas that is displaced from the cylinder space below the piston head 33 to the cylinder space above the piston head 33.

The base plate 10 may have a recess formed at the centre of its upper surface. That central recess can be used during assembly of the buffer, firstly as a register to locate the ring 11 whilst it is welded to the base plate 10, and then to locate a fixture which accurately locates the end cover 16 concentric with and square to the base plate 10 whilst the tube 15 is welded to the base plate 10 and the end cover 16 is welded to the tube 15.

There may be an annular clearance between the disc 38 and the ported tube 13 instead of the disc 38 being a sliding fit in that tube 13, in which case the disc 38 would be provided with a piston ring located in a circumferential groove, the piston ring serving to obstruct leakage of hydraulic fluid between the disc 38 and the tube 13.

An oil retaining seal may be accommodated in a recess which is formed at the bottom of the bore of the clamp ring 17, a gasket may be provided to seal the dipstick hole when the dipstick 41 is inserted and setting sealant may be applied to the upper end of the joint between the clamp ring 17 and the cover plate 16. However the provision of such a seal, gasket and sealant is optional because the buffer always stands vertically with the plunger 23 extending upwards.

The bore of the ported tube 13 may be rebated at the upper end and the depending annular projection 18 of the clamp ring 17 stepped externally, the lower portion of the projection 18 which has the smaller diameter external surface portion being spigotted into the bore of the tube 13 and the remainder of the projection 18 being spigotted into the rebated bore portion of the tube 13.

Means other than the interengaging spigots and rebated bore just described may be used to ensure that the lift buffer can only be assembled with the ported tube 13 the right way up which is of practical significance because the operation of the buffer is dependent upon the arrangement of the holes 14 in the tube 13. Such other means may comprise mating frusto-conical surfaces on the ported tube and the clamp ring.

The cup-shaped piston head 27 may be screwed onto the tube 24 and held against removal, the length of the thread engagement between that piston head 27 and the tube 24 being sufficient to ensure that, if that piston head 27 is unscrewed whilst the buffer plunger 23 is inflated, the sealing ring 28 would be forced out of the tube 24 and the gas pressure released before the piston head 27 is separated from the tube 24.

The top of the plunger tube 24 may be formed as a closed ended forging rather than by welding the end cap 25 to the tube as described above. Such a forged plunger tube is preferred to the welded structure where it is economically viable as would be the case with short stroke buffers, because of its superior gas retention characteristics. A short thin walled tubular spacer may be provided between the cup-shaped piston head 27 and the depending annular projection 18 of the clamp ring 17 in order to locate the buffer plunger 23 relative to the clamp ring 17 at the upper end of its travel. The spacer may be an outwardly-sprung slotted tube spring spacer located between the buffer plunger tube 24 and the ported tube 13.

The buffer may be provided with restraining means for holding the buffer plunger 23 in the retracted location for transport prior to installation of the buffer for use. Such restraining means may comprise a pair of hairpin type springs which are located at their ends in suitable holes which are formed in a plate which is carried by the outer end of the buffer plunger 23. The middle portions of the springs would be retained engaged in locating grooves when the buffer plunger 23 is retracted, each such locating groove being formed in the underside of a respective one of a pair of brackets which are welded to the outer surface of the outer casing tube 15 on opposite sides of that tube 15. The form of each locating groove would be such that the middle portion of the respective hairpin spring is deflected from the location to which it is urged by the resilience of that spring as it passes over the respective bracket with movement of the buffer plunger 23 to its retracted location. Hence, the middle portion of each hairpin spring is urged into engagement within the respective locating groove by the natural resilience of the material from which it is constructed.

In order to release the restraining means and allow the buffer to extend due to the action of the gas spring incorporated in it, such as would be desirable when the buffer has been installed for use, the middle portions of the hairpin springs would be pulled out of engagement from their respective locating grooves.

The brackets may be provided with holes to provide slinging points when the buffer is being handled or installed in the bottom of an elevator shaft pit. In the case of very long stroke buffers, where some support at the upper end of the casing is desirable, the brackets may be used for the attachment of suitable support members which are fixed to the normal elevator shaft framework at their other ends.

There may be more than one hole 19 for venting from between the disc 38 and the base 10 to the reservoir. For example, there may be four such vent holes arranged with their centres lying at spaced locations about a common pitch circle which is substantially directly below and similarly sized to the outer surface of the ported tube 13. Each such vent hole may lie between an adjacent pair of the welds 12.

## Claims

1. A cushioning device comprising a base (10); a cylindrical tube (13) which projects from the base (10), the tube (13) having a series of holes (14) formed in it at axially spaced locations, the holes (14) extending through the wall of the tube (13) and serving as communication ports for the passage of hydraulic fluid between the cylinder space within the tube (13) and an annular hydraulic fluid reservoir which surrounds the tube (13); a hollow buffer plunger (23) which is a sliding fit in the bore of the tube (13); and resilient means which urge the plunger (23) relative to the tube (13) and away from the base (10); characterised in that said resilient means comprise a gas spring which essentially comprises a variable volume chamber filled with compressed gas which chamber is formed by the interior of the hollow buffer plunger (23), and a rod (32) which is a sliding fit within an aperture in the end wall of the chamber that is nearer to the base (10), which projects into the cylinder space and which is urged into contact with said base (10) by gas pressure within said chamber whereby the volume of the gas filled chamber is reduced by the rod (32) as the buffer plunger (23) moves towards the base (10), there being sealing means which co-operate with the rod (32) and seal against fluid flow through said aperture.

2. A cushioning device according to claim 1, characterised by the inclusion of means which oppose separation of the rod (32) and the base (10).

3. A cushioning device according to claim 2, characterised in that said separation opposing means comprise a disc (38) which is fitted to the rod (32) and which slides within the tube (13) and means for venting the space between the disc (38) and the base (10).

4. A cushioning device according to any one of claims 1 to 3, in which the tube projects upwards from the base, characterised in that said sealing means include a volume of liquid (39) which lies on the lower end wall (26) of the chamber within the chamber and surrounds the rod (32) so as to form a liquid seal against escape of gas from within the chamber around the rod (32).

5. A cushioning device according to any one of claims 1 to 4, characterised in that the cylindrical tube (13) is spigotted into a ring (11) which is fixed to the base (10).

6. A cushioning device according to claim 5, characterised in that the cylindrical tube (13) is clamped against the base (10) by clamping means (15, 16 and 17) which form part of an outer casing of the device.

7. A cushioning device according to any one of claims 1 to 6 in which damping means are provided for controlling the rate of increase in volume of the gas-filled chamber, characterised in that restraining means are provided for holding the buffer plunger (23) in its retracted location within the tube (13).

## Revendications

1. Dispositif d'amortissement comprenant une base (10), un tube cylindrique (13) en saillie à partir de la base (10), le tube ayant une série de trous (14) qui sont ménagés dans le tube au niveau de positions axialement espacées, les trous (14) traversant la paroi du tube (13) et servant d'orifices de communication pour le passage d'un fluide hydraulique entre le volume de cylindre délimité à l'intérieur du tube (13) et un réservoir annulaire de fluide hydraulique qui entoure le tube (13), un plongeur creux (23) d'amortisseur qui est monté coulissant dans le perçage du tube (13), et des moyens élastiques qui sollicitent et déplacent le plongeur (23) par rapport au tube (13) en l'écartant de la base (10), caractérisé en ce que lesdits moyens élastiques comprennent un ressort à gaz qui comporte essentiellement une chambre de volume variable remplie de gaz comprimé, ladite chambre étant délimitée par l'intérieur du plongeur creux (23) d'amortisseur, et une tige (32) qui est montée coulissante à l'intérieur d'une ouverture dans la paroi d'extrémité de la chambre qui est la plus proche de la base (10), la tige (32) étant en saillie dans le volume de cylindre et étant sollicitée et déplacée en contact avec ladite base (10) par l'effet de la pression de gaz à l'intérieur de ladite chambre, de sorte que le volume de la chambre remplie de gaz est réduit par la tige (32) lorsque le plongeur (23) d'amortisseur se déplace en direction de la base (10), des moyens d'étanchéité coopérant avec la tige (32) afin d'empêcher tout écoulement de fluide par ladite ouverture.

2. Dispositif d'amortissement selon la revendication 1, caractérisé en ce qu'il comprend des moyens qui s'opposent à la séparation entre la tige (32) et la base (10).

3. Dispositif d'amortissement selon la revendication 2, caractérisé en ce que lesdits moyens qui s'opposent à la séparation comprennent un disque (38) qui est monté sur la tige (32) et qui coulisse à l'intérieur du tube (13), et des moyens de dépressurisation du volume délimité entre le disque (38) et la base (10).

4. Dispositif d'amortissement selon l'une des revendications 1 à 3, dans lequel le tube (13) est en saillie vers le haut à partir de la base (10), caractérisé en ce que lesdits moyens d'étanchéité comprennent un volume de liquide (39) qui repose sur la paroi d'extrémité inférieure (26) de la chambre, à l'intérieur de la chambre, et autour de la tige (32) de manière à former un joint liquide s'opposant à l'échappement de gaz hors de la chambre et en passant autour de la tige (32).

5. Dispositif d'amortissement selon l'une des revendications 1 à 4, caractérisé en ce que le tube cylindrique (13) est emboîté dans un anneau (11) qui est fixé à la base (10).

6. Dispositif d'amortissement selon la revendication 5, caractérisé en ce que le tube cylindrique (13) est serré contre la base (10) par des moyens de serrage (15, 16, 17) qui constituent une partie d'une enveloppe externe du dispositif.

7. Dispositif d'amortissement selon l'une des revendications 1 à 6, dans lequel des moyens d'amortissement sont disposés afin de commander le taux d'augmentation du volume de la chambre remplie de gaz, caractérisé en ce que des moyens de retenue sont prévus afin de maintenir le plongeur (23) d'amortisseur dans sa position rétractée à l'intérieur du tube (13).

## Patentansprüche

1. Stoßdämpfervorrichtung mit einer Grundplatte (10), einem zylindrischen Rohr (13), dessen Längsachse mit der Grundplatte einen Winkel einschließt und das in Richtung seiner Längsachse voneinander beabstandet eine Anzahl von Löchern (14) in seiner Wand zur Verbindung des Rohrinnenraumes mit einem ringförmig das Rohr umgebenden Vorratsbehälter für ein hydraulisches Fluid aufweist, mit weiter einem in dem Rohr (13) gleitfähigen hohlen Kolben (23) und mit Federmitteln, die auf den hohlen Kolben (23) einwirken, um ihn im Rohr in eine der Grundplatte entfernte Endstellung zu bringen, dadurch gekennzeichnet, daß die Federmittel eine Gasfeder einschließen, die eine mit komprimiertem Gas gefüllte von der Innenwand des hohlen Kolbens (23) und einer Kolbenstange (32) begrenzte Kammer variablen Volumens aufweist, wobei die Kolbenstange (32) gleitfähig durch eine Öffnung in dem Deckel der Kammer hindurchgeführt ist, der der Grundplatte (10) näher liegt, die in den Innenraum des hohlen Kolbens (23) hineinragt und die vom Gasdruck in der Kammer zu einer Bewegung in Richtung der Berührung mit der Grundplatte veranlaßt wird, wobei das in der Kammer befindliche Gasvolumen um das Volumen der Kolbenstange (32) verringert wird, wenn sich der hohle Kolben (23) in Richtung auf die Bodenplatte (10) bewegt, wo Dichtungsmittel vorgesehen sind, die mit der Kolbenstange (32) zusammenwirken und eine Fluidströmung durch die Deckelöffnung verhindern.

2. Stoßdämpfervorrichtung nach Anspruch 1, gekennzeichnet durch Mittel zum Verhindern des Trennens der Kolbenstange (32) von der Grundplatte (10).

3. Stoßdämpfervorrichtung nach Anspruch 2, dadurch gekennzeichnet, daß die Mittel zum Verhindern des Trennens der Kolbenstange (32) von der Grundplatte (10) eine Scheibe (38) und ein Mittel zum Entlüften des Zwischenraumes zwischen der Scheibe (38) und der Grundplatte (10) aufweist, wobei die Scheibe (38) der Kolbenstange (32) zugeordnet und im Rohr (13) gleitfähig ist.

4. Stoßdämpfervorrichtung nach einem der Ansprüche 1 bis 3, wobei das Rohr von der Grundplatte aus nach oben gerichtet ist, dadurch gekennzeichnet, daß die Dichtungsmittel ein Flüssigkeitsvolumen (39) einschließen, das innerhalb der Kammer auf deren unterem Deckel (26) aufliegt und die Kolbenstange (32) umgibt, um eine Flüssigkeitsdichtung gegen das Austreten von Gas aus der Kammer in dem die Kolbenstange (32) umgebenden Bereich zu ergeben.

5. Stoßdämpfervorrichtung nach einem der Ansprüche 1 bis 4, dadurch gekennzeichnet, daß das zylindrische Rohr (13) in einem Ring (11) verzapft ist, der auf der Grundplatte (10) befestigt ist.

6. Stoßdämpfervorrichtung nach Anspruch 5, dadurch gekennzeichnet, daß das zylindrische Rohr (13) auf der Grundplatte (10) mit Klemmmitteln (15, 16 und 17) verklemmt ist, die Teil eines Außengehäuses der Vorrichtung sind.

7. Stoßdämpfervorrichtung nach einem jeden der Ansprüche 1 bis 6, mit Dämpfungsmitteln zur Steuerung der Rate der Volumenvergrößerung in der gasgefüllten Kammer, gekennzeichnet durch Mittel zum Zurückhalten des hohlen Kolbens (23) in seiner inneren Endstellung innerhalb des Rohres (13).

0 021 698

FIG.1

FIG.2

FIG.3

2